# DEMANDE DE BREVET EUROPEEN

(11) **EP 2 541 113 A1**
(43) Date de publication de la demande: **02.01.2013**
(21) Numéro de dépôt: 12173222.6
(22) Date de dépôt: 22.06.2012
(51) Int. Cl.: F16L 3/13

(54) **Dispositif de maintien d'un élément longitudinal à verrouillage intégré**

(30) Priorité: 28.06.2011 FR 1155733
(71) Demandeur: Amphenol Air LB, 08110 Blagny (FR)
(72) Inventeur: Montet, Davy, 08160 Vendresse (FR)
(74) Mandataire: Delprat, Olivier

(57) **Abrégé**

Ce dispositif de maintien d'un élément longitudinal (E), de type faisceau de câble ou tube, sur un support S, comprend un collier de serrage (2) élastiquement déformable entre une position d'ouverture du collier permettant l'insertion de l'élément dans le collier et une position de fermeture du collier permettant le maintien dudit élément, le collier comportant des moyens de fixation (24) sur le support et des moyens de verrouillage du collier en position fermée.

Les moyens de verrouillage comportent des moyens d'encliquetage principaux (7, 8) prévus sur une première zone d'extrémité (18) du collier et coopérant avec des moyens d'encliquetage complémentaires (13) prévus sur une deuxième zone d'extrémité (19) du collier et des moyens d'encliquetage secondaires (14) adaptés pour verrouiller les moyens d'encliquetage principaux dans les moyens d'encliquetage complémentaires.

## Description

L'invention concerne, de manière générale, les colliers de câblage, et se rapporte plus particulièrement à un dispositif de maintien d'un faisceau de câbles ou d'un tube sur un support.

Une application particulièrement intéressante d'un tel dispositif concerne le maintien d'un faisceau de câbles ou d'un tube sur la structure interne d'un aéronef ou dans tout autre domaine industriel.

Mais l'invention se rapporte, de manière générale, à la fixation d'un faisceau d'éléments longitudinaux ou d'un tube sur une structure.

Comme on le sait, dans le domaine du câblage pour l'aéronautique, un grand nombre de colliers sont susceptibles d'être utilisés pour le maintien de l'ensemble des faisceaux de câbles du réseau de bord d'un aéronef. Les gains en poids étant l'une des préoccupations constantes qui s'imposent aux équipementiers intervenant dans le domaine de l'aéronautique, cette exigence s'impose également dans le domaine des équipements de câblage et, en particulier, en ce qui concerne les colliers de maintien de faisceaux de câbles.

En outre, dans le domaine du câblage pour l'aéronautique, des contraintes additionnelles se posent, en raison de l'environnement vibratoire qui règne à bord des aéronefs, de sorte que les colliers de câblage doivent être capables d'assurer efficacement leur fonction de maintien, même lorsqu'ils sont soumis à de telles vibrations.

Dans l'état de la technique, les dispositifs de maintien de faisceaux de câbles étaient réalisés à partir de colliers métalliques réalisés à partir d'une patte recourbée en forme d'arc de cercle et entourée d'un fourreau de silicone.

En outre, les colliers de maintien de câbles ou de tuyauterie sont refermés à l'aide d'une vis rapportée ou au moyen d'une attache, également rapportée et serrée au moyen d'un outillage spécifique.

On conçoit donc que l'opération de montage d'un chemin de câbles ou, de manière générale, d'un élément longitudinal au moyen d'un ensemble de colliers de serrage, dont le nombre peut être relativement important, est une opération relativement longue et peu commode à mettre en place.

Le but de l'invention est donc de pallier cet inconvénient et de proposer un dispositif de maintien d'un élément longitudinal auto-verrouillable, qui ne nécessite pas de prévoir d'élément de verrouillage rapporté, ou d'utiliser un outil spécifique pour verrouiller le ou les éléments à maintenir.

L'invention a donc pour objet un dispositif de maintien d'un élément longitudinal, de type faisceau de câbles ou tube, sur un support, comprenant un collier de serrage élastiquement déformable entre une position d'ouverture du collier permettant l'insertion de l'élément dans le collier, et une position de fermeture du collier permettant le maintien dudit élément, le collier comportant des moyens de fixation sur le support et des moyens de verrouillage du collier en position fermée.

Les moyens de verrouillage comportent, selon une caractéristique de ce dispositif de maintien, des moyens d'encliquetage principaux prévus sur une première zone d'extrémité du collier et coopérant avec des moyens d'encliquetage complémentaires prévus sur une deuxième zone d'extrémité du collier, et des moyens d'encliquetage secondaires adaptés pour verrouiller les moyens d'encliquetage principaux dans les moyens d'encliquetage complémentaires.

Le collier peut ainsi être auto-verrouillé, le verrouillage du collier en position fermée s'effectuant par simple encliquetage.

En outre, grâce à la présence des moyens d'encliquetage secondaires, on obtient un verrouillage efficace et insensible aux vibrations.

Selon une autre caractéristique du dispositif de maintien, les moyens d'encliquetage principaux et secondaires agissent sur deux faces mutuellement opposées du collier de serrage.

Dans un mode de réalisation, la première zone d'extrémité du collier comporte une patte d'encliquetage pourvue d'une dent d'extrémité s'étendant à partir de l'une des faces du collier et s'encliquetant dans un logement prévu sur l'autre face de la deuxième zone d'extrémité du collier.

La patte d'encliquetage est avantageusement tournée vers la face interne du collier.

Par exemple, la patte d'encliquetage s'étend sensiblement à angle droit à partir du collier.

En ce qui concerne la deuxième zone d'extrémité, celle-ci comporte notamment, dans un mode de réalisation, une patte de verrouillage dotée d'un bec d'extrémité s'encliquetant dans un cran formé par la patte d'encliquetage.

On prévoira avantageusement un trou latéral dans la deuxième zone d'extrémité et débouchant vers les moyens d'encliquetage complémentaires, ce trou étant apte à recevoir un outil de déverrouillage des moyens de verrouillage.

Dans un mode de réalisation, le collier comporte une patte médiane de fixation s'étendant globalement tangentiellement à partir de la face externe de la zone médiane du collier.

La patte de fixation peut comporter un oeillet destiné à recevoir un pion de fixation du collier sur le support.

Afin d'absorber les vibrations, on pourra prévoir, sur la face interne du collier, une couche protectrice surmoulée, notamment en silicone.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue de profil d'un dispositif de maintien d'un élément longitudinal conforme à l'invention;
- les figures 2 et 3 montrent le dispositif de la figure 1, fixé à un support, respectivement avant et après montage d'un élément à maintenir ;
- la figure 4 est une vue de détail du dispositif des figures 1 à 3, montrant les moyens de verrouillage ;
- les figures 5, 6 et 7 illustrent le fonctionnement d'un dispositif de maintien conforme à l'invention ; et

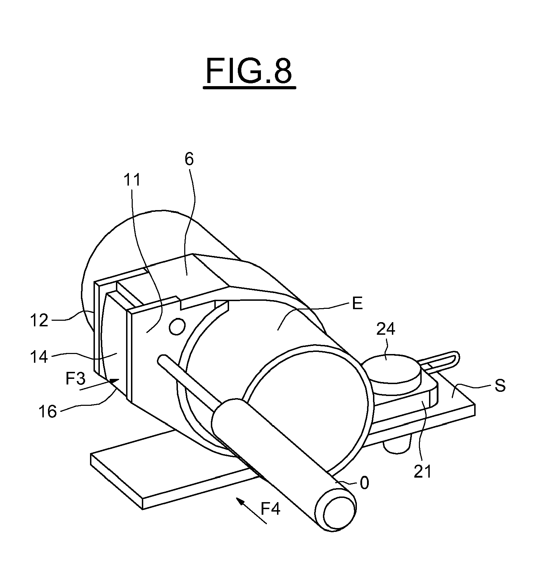

- la figure 8 est un schéma illustrant le déverrouillage du dispositif de maintien.

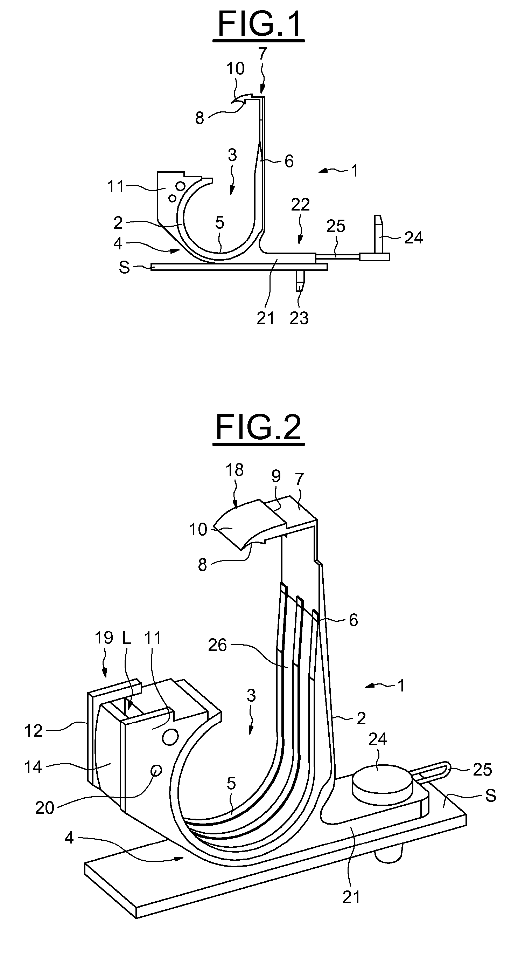

En se référant tout d'abord aux figures 1 à 4, on va décrire la structure d'un dispositif de maintien d'un élément longitudinal conforme à l'invention, désigné par la référence numérique générale 1.

Comme illustré, ce dispositif 1 est destiné à maintenir un élément longitudinal E, schématiquement représenté, sur un support S.

Par exemple, l'élément E est constitué par un toron de câbles destiné à être fixé sur la structure interne d'un aéronef. Mais on ne sort pas du cadre de l'invention lorsque le dispositif est destiné à la fixation de tout autre type d'éléments longitudinaux, en particulier dans le domaine industriel, par exemple un tuyau.

Comme on le voit, ce dispositif 1 est essentiellement constitué d'un collier 2 comportant une zone 3 partiellement annulaire, c'est-à-dire ouverte, ayant une surface externe 4 et une surface interne 5 concave délimitant un logement de réception de l'élément E. La zone 3 partiellement annulaire se prolonge, d'un côté, par une languette 6 destinée à venir fermer le collier après positionnement de l'élément longitudinal E.

La languette 6 se prolonge par une patte d'encliquetage 7 dotée d'une dent d'extrémité 8 tournée vers la surface concave 5.

La patte d'encliquetage s'étend globalement perpendiculairement à partir de la surface interne de la languette 6, et délimite ainsi, avec cette dernière, une arête à angle droit. Elle comporte extérieurement un cran 9 transversal pratiqué entre l'arête et le bord d'extrémité de la patte 7.

On notera toutefois que la surface externe d'extrémité de la patte d'encliquetage 7 forme une rampe 10.

A l'opposé de la patte d'encliquetage 7, le collier 2 est doté de deux bords latéraux 11 et 12 en vis-à-vis, délimitant entre eux un logement L dans lequel vient s'engager la patte d'encliquetage 7 lors de la fermeture du collier.

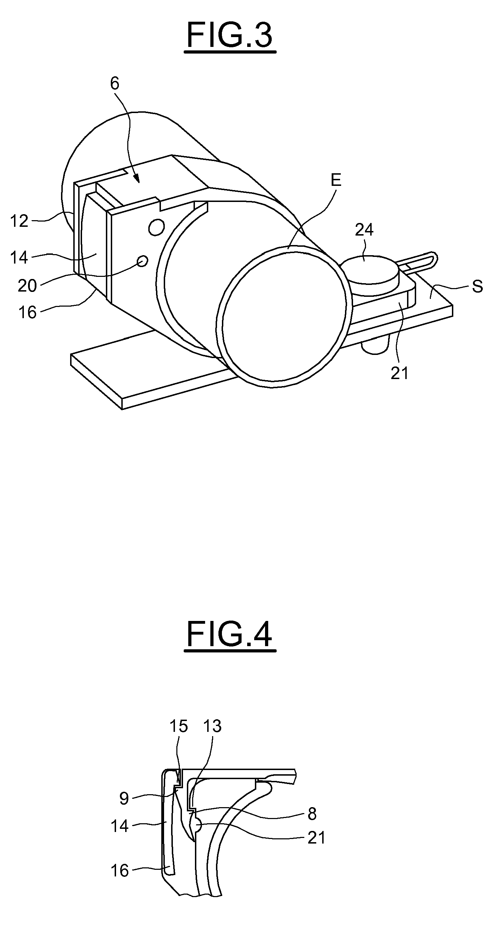

En se référant en particulier à la figure 4, on voit que la paroi constitutive du collier comporte extérieurement, entre les deux bords latéraux 11 et 12, un épaulement 13 dans lequel vient s'encliqueter la dent d'encliquetage 8. Vers l'arrière, les deux bords latéraux 11 et 12 comportent une patte de verrouillage 14 pourvue d'un bec 15 d'extrémité dans lequel vient s'encliqueter le cran 9.

La patte de verrouillage 14 est une patte flexible, qui est susceptible d'adopter une position stable, visible sur la figure 4, qui correspond à une position de verrouillage du cran 9 de la patte d'encliquetage 7, et une position déformée dans laquelle le bec d'extrémité 15 est décalé vers l'arrière, soit sous l'action de la rampe 10 de la patte d'encliquetage, lors de la fermeture du collier, soit par appui manuel sur une zone d'extrémité 16 opposée au bec 15, lors de la libération du cran 9.

Comme on le conçoit, le collier 2 est ainsi pourvu d'une première zone d'extrémité 18 comprenant des moyens d'encliquetage principaux formés par la patte d'encliquetage 7 dotée de sa dent d'extrémité 8, et une extrémité opposée 19 dans laquelle sont pratiqués des moyens de verrouillage complémentaires, formés par l'épaulement 13 dans lequel vient s'encliqueter la dent d'extrémité 8 de la patte 7.

La deuxième zone d'extrémité 19 est par ailleurs pourvue de moyens d'encliquetage secondaires, formés par la patte de verrouillage flexible 14, qui vient s'encliqueter dans le cran 9 prévu sur la patte d'encliquetage 7 pour verrouiller la patte d'encliquetage en position de fermeture du collier.

On notera que le collier 2 est réalisé en une seule pièce en matière thermoplastique injectée, par exemple en polyétheréther kétone, également connu sous le terme de « PEEK ». Un tel matériau thermoplastique présente un poids relativement faible en comparaison des matériaux de type aluminium ou inox utilisés selon l'état de la technique. Il est en outre capable de se déformer aisément entre une position stable d'ouverture du collier, visible sur les figures 1 et 2, une position totalement ouverte, dans laquelle la languette 6 s'étend sensiblement à plat, permettant un positionnement aisé d'un toron de câble, et une position fermée, visible sur la figure 3.

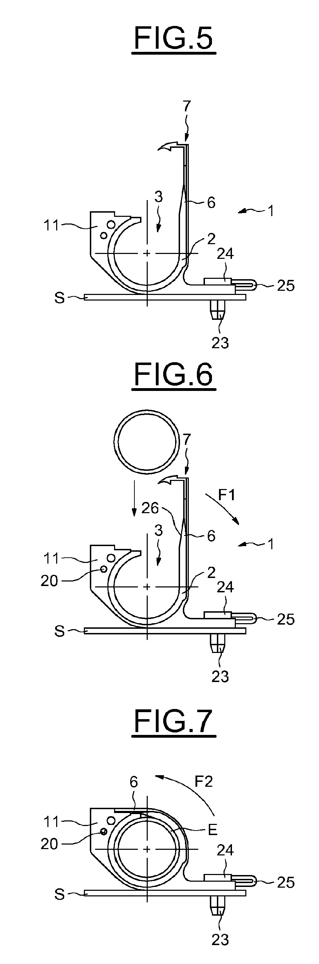

En se référant aux figures 5 à 7, le montage d'un élément longitudinal dans le dispositif 1 qui vient d'être décrit consiste tout d'abord à présenter l'élément longitudinal, à savoir un toron de câble ou un tuyau à la verticale par rapport au dispositif 1. On insère alors l'élément longitudinal dans la zone partiellement annulaire 3. Si nécessaire, on ouvre la languette 6 à plat pour faciliter l'entrée de l'élément dans le dispositif (flèche F1). Il convient alors de refermer la languette en la repliant autour de l'élément à fixer (flèche F2). Lors de l'insertion de la patte 7 dans le logement L, la patte 7 vient se verrouiller par encliquetage dans l'épaulement 13 et la patte de verrouillage 14 vient se verrouiller de même dans le cran 9. On obtient ainsi un double verrouillage permettant d'assurer le maintien du dispositif en position verrouillée, même dans un environnement soumis à des vibrations.

On notera que le verrouillage du collier obtenu par les moyens de verrouillage principaux et secondaires constitue un verrouillage amovible. En effet, l'un ou chacun des deux bords latéraux 11 et 12 du collier est doté d'un trou 20 débouchant dans une empreinte 21 (figure 4) pratiquée dans la surface externe du collier, à l'endroit de la zone de verrouillage du cran 9 de la patte d'encliquetage 7.

On notera à cet égard que la surface de la dent d'encliquetage 8, tournée vers l'empreinte 21, adopte une forme concave. Ainsi, pour déverrouiller le collier, il convient, d'une part, d'exercer manuellement un effort sur la zone 16 de la patte de verrouillage 14, de manière à libérer le bec 15 du cran 9 (flèche F3) et, simultanément, d'insérer un outil O dans le trou 20 de manière à dégager la dent 8 de l'épaulement 13 (flèche F4). Le collier reprend alors spontanément sa position stable visible sur les figures 5 et 6.

Par ailleurs, le montage du dispositif sur le support S est obtenu en prévoyant une patte médiane 21 de fixation s'étendant globalement tangentiellement à partir de la face externe de la zone médiane du collier, et qui est pourvue d'un oeillet 22 à partir duquel s'étend un ergot 23.

La patte de fixation est encore pourvue d'un pion de fixation 24 auquel elle est reliée par un lien 25, et qui vient s'engager dans l'oeillet 22 et dans un trou correspondant pratiqué dans le support S pour venir déformer latéralement l'ergot 23 et assurer un maintien efficace du collier sur le support S.

On notera enfin que, dans le but d'absorber les vibrations, une partie substantielle de la surface interne du collier, qui est destinée à venir recouvrir l'élément E est revêtue d'une couche protectrice 26 surmoulée, notamment en silicone.

Par silicone, on entend ici un polymère siliconé. L'emploi du silicone permet, grâce à ses propriétés élastiques, un maintien efficace de l'élément longitudinal E, tout en absorbant les vibrations. En outre, la présence de cette couche de silicone permet d'éviter tout risque d'altération de l'élément E en cas de pincement lors de la fermeture du dispositif.

Afin d'obtenir une bonne cohésion entre le silicone et le collier 2, cette couche protectrice siliconée est réalisée par surmoulage, permettant d'éviter tout risque de déchaussement de la couche protectrice.

## Revendications

1. Dispositif de maintien d'un élément longitudinal (E), de type faisceau de câble ou tube, sur un support S, comprenant un collier de serrage (2) élastiquement déformable entre une position d'ouverture du collier permettant l'insertion de l'élément dans le collier et une position de fermeture du collier permettant le maintien dudit élément, le collier comportant des moyens de fixation (24) sur le support et des moyens de verrouillage du collier en position fermée, **caractérisé en ce que** les moyens de verrouillage comportent des moyens d'encliquetage principaux (7, 8) prévus sur une première zone d'extrémité (18) du collier et coopérant avec des moyens d'encliquetage complémentaires (13) prévus sur une deuxième zone d'extrémité (19) du collier et des moyens d'encliquetage secondaires (14) adaptés pour verrouiller les moyens d'encliquetage principaux dans les moyens d'encliquetage complémentaires.

2. Dispositif selon la revendication 1, **caractérisé en ce que** les moyens d'encliquetage principaux et secondaires agissent sur deux faces mutuellement opposées du collier de serrage.

3. Dispositif selon l'une des revendications 1 et 2, **caractérisé en ce que** la première zone d'extrémité du collier comporte une patte d'encliquetage (7) pourvue d'une dent d'extrémité (8) s'étendant à partir de l'une des faces du collier et s'encliquetant dans un logement prévu sur l'autre face de la deuxième zone d'extrémité (19) du collier.

4. Dispositif selon la revendication 3, **caractérisé en ce que** la patte d'encliquetage (7) est tournée vers la face interne du collier.

5. Dispositif selon l'une des revendications 3 et 4, **caractérisé en ce que** la patte (7) s'étend sensiblement à angle droit à partir du collier.

6. Dispositif selon l'une quelconque des revendications 3 à 5, **caractérisé en ce que** la deuxième zone d'extrémité (19) comporte une patte de verrouillage (14) dotée d'un bec d'extrémité (15) s'encliquetant dans un cran (9) formé par la patte d'encliquetage.

7. Dispositif selon l'une quelconque des revendications 1 à 6, **caractérisé en ce que** la deuxième zone d'extrémité (19) comporte un trou latéral (20) débouchant vers les moyens d'encliquetage complémentaires (13) et est apte à recevoir un outil de déverrouillage de moyens de verrouillage.

8. Dispositif selon l'une quelconque des revendications 1 à 7, **caractérisé en ce que** le collier comporte une patte (21) médiane de fixation s'étendant globalement tangentiellement à partir de la face externe de la zone médiane du collier (2).

9. Dispositif selon la revendication 8, **caractérisé en ce que** la patte de fixation (21) comporte un oeillet (22) destiné à recevoir un pion de fixation (24) du collier sur un support.

10. Dispositif selon l'une quelconque des revendications 1 à 9, **caractérisé en ce que** la face interne du collier est revêtue d'une couche protectrice (26) surmoulée, notamment en silicone.
